# EUROPEAN PATENT SPECIFICATION

(11) **EP 0 710 776 B1**
(45) Date of publication and mention of the grant of the patent: **13.01.1999**
(21) Application number: 95307566.0
(22) Date of filing: 24.10.1995
(51) Int. Cl.: F16D 13/38, F16D 13/58

(54) **Clutch**
Kupplung
Embrayage

(30) Priority: 02.11.1994 GB 9422053
(43) Date of publication of application: 08.05.1996
(73) Proprietor: Alcon Components Limited, Tamworth, Staffs B79 7TN (GB)
(72) Inventor: Moore, John B., Leamington Spa, Warwickshire CV33 9HR (GB)
(74) Representative: Hands, Horace Geoffrey

(56) References cited:
- FR-A- 832 610
- FR-A- 1 126 120
- FR-A- 1 294 170
- US-A- 3 283 864
- US-A- 3 300 007
- US-A- 3 791 499

## Description

This invention relates to a transmission clutch especially for competition vehicles for example racing cars. This differs from the kind used in less powerful or more gently driven vehicles because of the relatively large power to be transmitted and the need for light weight.

USA 3791499-A discloses a clutch for a racing car according to the preamble of claim 1 and providing particularly high spring loading in a clutch of small diameter by using a stack of diaphragm springs which apply pressure to an external ring connected to a pressure plate located within the clutch by a ring of pins extending through apertures in the clutch cover. The same pressure plate is made angularly fast with the clutch cover by a series of dowels fixed to the clutch cover and extending into aligned sockets in the pressure plate the dowels being fixed to the cover by screws.

According to the invention a clutch comprises a stack of plates located within a housing, a diaphragm spring urging said stack into drive transmitting relationship, and said spring being located outside said housing, characterised in that one of said plates is provided with a plurality of axial projections each of which extends through a corresponding snug aperture in the housing for engagement with the periphery of said spring and also serving to make said one plate angularly fast with said housing.

In a multi-plate clutch, which has several such pressure plates only one will have such projections. The spring may be located by screws engaged with a retaining ring.

This facilitates rapid replacement of the clutch assembly, and reduces the volume required by the clutch housing as compared with previous designs. Reduced volume is considered to be useful to enable the clutch to be removed from the vehicle through a small gap between other components, with a minimum of dismantling.

One embodiment of the invention is more particularly described with reference to the accompanying drawing wherein:
Figure 1 is an elevation, partly broken away to show the construction of parts of the clutch; and
Figure 2 is a sectional elevation showing those parts assembled to the flywheel.

Turning to the drawing, the engine flywheel 10 forms the drive plate. Cover 12 is fixed to the flywheel by a ring of equi-spaced bolts 14.

Between the housing and the flywheel is interposed a series of plates, namely alternate pressure plates and driven plates 19 and the latter are integral with hubs 16 which may in use be splined to a gearbox shaft. The pressure plates are angularly fast with the flywheel and housing, but the driven plates are free. When the stack of plates generally indicated at 18 is spring urged against the flywheel 10 drive is transmitted from the flywheel to the hubs 16. When the transmission is de-clutched the driven plates 19 are free to rotate relative to the flywheel.

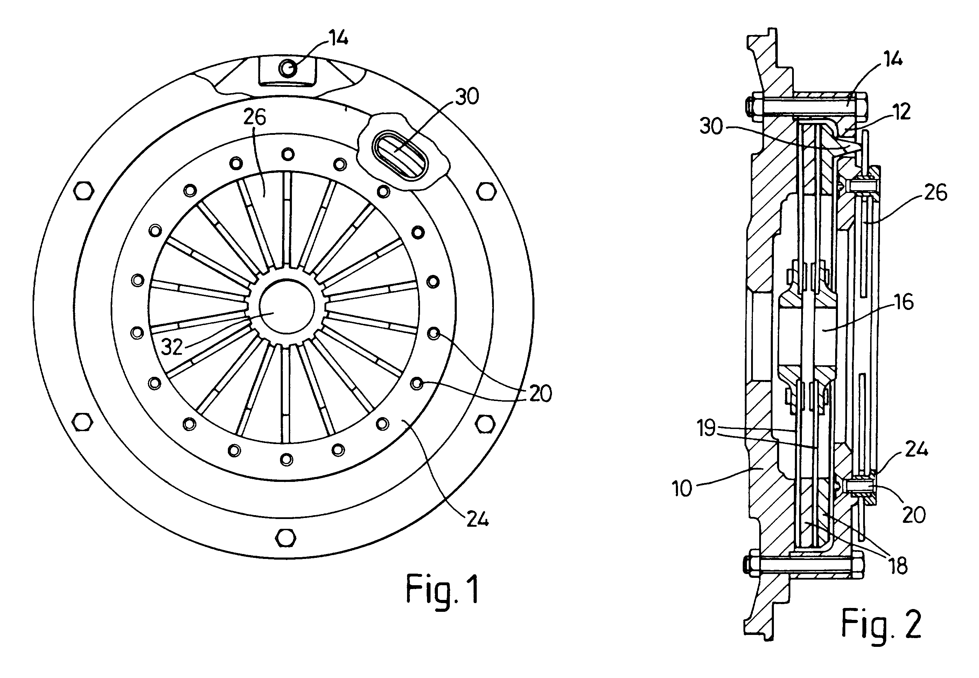

The housing is provided with a ring of screws 20 engaged with retaining ring 24 to locate and support the diaphragm spring 26 which extends in a plane generally parallel to the plates but on the exterior of the housing. The housing 12 is apertured to allow projections 30 from one pressure plate 18 to extend into contact with the spring. When the clutch is actuated by for example a thrust bearing (not shown) displacing the centre of the diaphragm spring at 32, the spring dishes to the left as seen in Fig.2 to release the frictional clamping of the drive and driven plates, and when the thrust load is released and the spring reverts to the Figure 2 position the parts are again clutched together.

The retaining ring 24 may be provided with a series of screw-tapped bores to accept screws 20, or the screws may be attached to nuts which are loosely retained by the ring.

The invention also has the advantage that the diaphragm spring is distanced from the heat generated in the clutch so reducing chances of spring failure and loss of load in use.

## Claims

1. A clutch comprising a stack of plates (18,19) located within a housing (10,12), a diaphragm spring (26) urging said stack into drive transmitting relationship, and said spring being located outside said housing, characterised in that one of said plates (18) is provided with a plurality of axial projections (30) each of which extends through a corresponding snug aperture in the housing (12) for engagement with the periphery of said spring (26) and also serving to make said one plate (18) angularly fast with said housing (12).

2. A clutch as claimed in Claim 1 characterised that said diaphragm spring (26) is located between the exterior of the housing (12) and a retaining ring (24), and said ring is fixed to said housing by screws (20).

## Patentansprüche

1. Kupplung, enthaltend
- in einem Gehäuse (10, 12) übereinander angeordnete Platten (18, 19),
- eine Schwingfeder (26), die die übereinander angeordneten Platten in ein Antriebsübertragungsverhältnis drängt, wobei die Feder außerhalb des Gehäuses angeordnet ist,
dadurch gekennzeichnet, daß eine der Platten (18) eine Vielzahl axialer Vorsprünge (30) aufweist, von denen sich jeder zum Eingriff in die Außenfläche der Feder (26) durch eine entsprechende Passöffnung im Gehäuse (12) hindurch erstreckt und die auch dazu dienen, die eine Platte (18) in einen festen Winkel mit dem Gehäuse (12) zu bringen.

2. Kupplung nach Anspruch 1, dadurch gekennzeichnet, daß die Schwingfeder (26) zwischen der Außenseite des Gehäuses (12) und einer Haltefeder (24) angeordnet ist, und der Ring ist mit Hilfe von Schrauben (20) am Gehäuse befestigt.

## Revendications

1. Embrayage comprenant un empilage de plaques (18,19) disposées à l'intérieur d'un logement (10,12), un ressort en diaphragme (26) contraignant le dit empilage dans une relation de transmission d'entraînement, et le dit ressort étant disposé à l'extérieur du dit logement, caractérisé en ce que l'une des dites plaques (18) présente plusieurs saillies axiales (30) dont chacune se prolonge à travers une ouverture correspondante ménagée dans le logement (12) pour engager la périphérie du dit ressort (26) et servant aussi à rendre la dite plaque (18) solidaire angulairement du dit logement (12).

2. Embrayage selon la revendication 1, caractérisé en ce que le dit ressort en diaphragme (26) est placé entre l'extérieur du logement (12) et un anneau de retenue (24), le dit anneau étant fixé par des vis (20) au dit logement.
